# EUROPEAN PATENT SPECIFICATION

(11) **EP 4 381 752 B1**
(45) Date of publication and mention of the grant of the patent: **30.09.2026**
(21) Application number: 21952234.9
(22) Date of filing: 04.08.2021
(51) Int. Cl.: H04W 4/70

(54) **METHODS AND APPARATUSES FOR DETERMINING SYNCHRONIZATION VALIDITY TIMER**
VERFAHREN UND VORRICHTUNGEN ZUR BESTIMMUNG EINES SYNCHRONISATIONSGÜLTIGKEITSZEITGEBERS
PROCÉDÉS ET APPAREILS POUR DÉTERMINER UN TEMPORISATEUR DE VALIDITÉ DE SYNCHRONISATION

(43) Date of publication of application: 12.06.2024
(73) Proprietor: Lenovo (Beijing) Limited, Beijing 100085 (CN)
(72) Inventor: YAN, Zhi, Beijing 100052 (CN); LIU, Hongmei, Beijing 100096 (CN); ZHANG, Yuantao, Beijing 100013 (CN); WANG, Haiming, Beijing 100011 (CN)
(74) Representative: Openshaw & Co.
(86) International application number: PCT/CN2021/110553
(87) International publication number: WO 2023/010332

(56) References cited:
- WO-A1-2009/075231
- WO-A1-2020/032659
- CN-A- 101 841 905
- CN-A- 102 104 854
- CN-A- 107 734 705
- CN-A- 108 243 390
- CN-A- 111 294 928

## Description

### TECHNICAL FIELD

The present disclosure relates to wireless communications, and more particularly relates to methods and apparatuses for determining a synchronization validity timer.

### BACKGROUND OF THE INVENTION

In a non-terrestrial network (NTN) communication system, the distance from a user equipment (UE) to a satellite may be variable, which renders the receiving time of uplink (UL) synchronization information for different UEs to be different. Therefore, the uplink UL synchronization information validity durations for different UEs may be different.

In addition, the time when a UE receives the UL synchronization information is not known to a base station (BS), which may render misunderstanding of the expiration time of a UL synchronization information validity timer between the BS and the UE.

WO2020032659A1 discloses a method and device for RRC idle mode uplink transmission. The method may include: receiving a parameter and resource configuration for RRC idle mode uplink transmission; and, transmitting, in a RRC idle mode, uplink data according to preconfigured at least one of a parameter or a resource.

### SUMMARY

The present disclosure proposes some solutions for determining a synchronization validity timer, which may address issues including, for example but not limited to, misunderstanding of expiration time between a BS and a UE. The invention is defined by the appended independent claims.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
Fig. 1 illustrates a schematic diagram of an exemplary NTN communication system according to some embodiments of the present disclosure;
Figs. 2A and 2B illustrate a hybrid automatic repeat request (HARQ) round trip time (RTT) timer and a time alignment timer, respectively;
Fig. 3 illustrates an example of a BCCH modification period according to some embodiments of the present disclosure;
Fig. 4 illustrates an exemplary configuration of a synchronization validity timer;
Figs. 5A, 5B, and 5C illustrate some exemplary configurations of a synchronization validity timer according to some embodiments of the present disclosure;
Fig. 6 illustrates an exemplary configuration of a synchronization validity timer according to some embodiments of the present disclosure;
Fig. 7 illustrates a flow chart of an exemplary method performed by a UE according to some embodiments of the present disclosure; and
Fig. 8 illustrates a simplified block diagram of an exemplary apparatus according to some embodiments of the present disclosure.

### DETAILED DESCRIPTION

The detailed description of the appended drawings is intended as a description of the currently preferred embodiments of the present invention, and is not intended to represent the only form in which the present invention may be practiced. It should be understood that the same or equivalent functions may be accomplished by different embodiments that are intended to be encompassed within the scope of the present invention.

While operations are depicted in the drawings in a particular order, persons skilled in the art will readily recognize that such operations need not be performed in the particular order shown or in sequential order, or that not all illustrated operations need be performed, for example, to achieve desirable results, sometimes one or more operations can be skipped, but only insofar said sequential order alterations or omissions are encompassed within the scope of the invention as defined by the appended claims. Further, the drawings can schematically depict one or more example processes in the form of a flow diagram. However, other operations that are not depicted can be incorporated in the example processes that are schematically illustrated. For example, one or more additional operations can be performed before, after, simultaneously, or between any of the illustrated operations. In certain circumstances, multitasking and parallel processing can be advantageous.

Reference will now be made in detail to some embodiments of the present disclosure, examples of which are illustrated in the accompanying drawings. To facilitate understanding, embodiments are provided under specific network architecture and new service scenarios, such as 3^{rd} generation partnership project (3GPP) 5G (NR), 3GPP long-term evolution (LTE), and so on. It is contemplated that along with the developments of network architectures and new service scenarios, all embodiments in the present disclosure are also applicable to similar technical problems; and moreover, the terminologies recited in the present disclosure may change, which should not affect the principle of the present disclosure.

A non-terrestrial network (NTN) is a network in which a non-terrestrial element (e.g. satellite) is involved. Depending on where the BS (e.g., eNB that is used in scenario of enhanced machine-type communication (eMTC) or narrowband internet-of-things (NB-IoT or NBIoT), or gNB that is used in scenario of NR) is located, the NTN has two cases: for regenerative payload and for bent-pipe payload. In the case of regenerative payload, the BS is located on the satellite. In the case of bent-pipe payload, the BS is located in a terrestrial place while the satellite serves as a relay point between the UE and the BS.

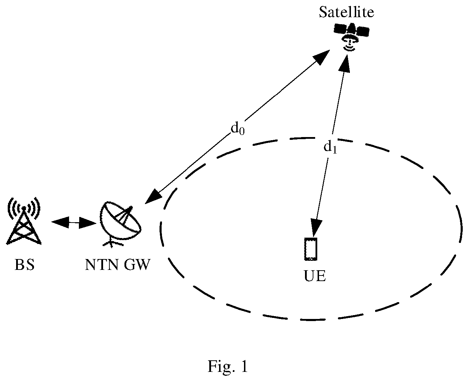

Fig. 1 illustrates an exemplary NTN communication system with a bent-pipe payload according to some embodiments of the present disclosure.

The NTN communication system in Fig. 1 includes a UE, a satellite, an NTN gateway (GW), and a BS. The UE supports NTN function and can be referred to as an NTN UE. The receiver and transmitter distance (RTD) between the satellite and the BS is d₀, and the RTD between the satellite and the UE is d₁. The radio link between the UE and the satellite can be referred to as a service link, and the radio link between the satellite and the BS can be referred to as a feeder link.

The UE may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. According to an embodiment of the present disclosure, the UE may include a portable wireless communication device, a smart phone, a cellular telephone, a flip phone, a device having a subscriber identity module, a personal computer, a selective call receiver, or any other device that is capable of sending and receiving communication signals on a wireless network. In some embodiments, the UE include wearable devices, such as smart watches, fitness bands, optical head-mounted displays, or the like. Moreover, the UE may be referred to as a subscriber unit, a mobile, a mobile station, a user, a terminal, a mobile terminal, a wireless terminal, a fixed terminal, a subscriber station, a user terminal, or a device, or described using other terminology used in the art.

The satellite may include any type of satellite, for example, a satellite with low earth orbit (LEO), a satellite with geosynchronous earth orbit (GEO), etc.

The BS as illustrated and shown in Fig. 1 is not a specific base station, but may be any base station(s) in the communication system. In certain embodiments, the BS may also be referred to as an access point, an access terminal, a base, a macro cell, a Node-B, an enhanced Node B (eNB), a gNB, a Home Node-B, a relay node, or a device, or described using other terminology used in the art. The BS is generally part of a radio access network that may include one or more controllers communicably coupled to one or more corresponding BSs.

It is contemplated that, in accordance with some other embodiments of the present disclosure, an NTN communication system may include more BSs, more satellites, and more UEs.

The NTN communication system is compatible with any type of network that is capable of sending and receiving wireless communication signals. For example, the NTN communication system is compatible with a wireless communication network, a cellular telephone network, a time division multiple access (TDMA)-based network, a code division multiple access (CDMA)-based network, an orthogonal frequency division multiple access (OFDMA)-based network, an LTE network, a 3GPP-based network, a 3GPP 5G network, a satellite communications network, a high altitude platform network, and/or other communications networks.

In an embodiment, the NTN communication system is compatible with the 5G NR of the 3GPP protocol, wherein the BS may transmit data using an orthogonal frequency division multiplexing (OFDM) modulation scheme on the downlink (DL) and the UE may transmit data on the UL using a single-carrier frequency division multiple access (SC-FDMA) or OFDM scheme. More generally, however, the NTN communication system may implement some other open or proprietary communication protocols, for example, WiMAX, among other protocols.

In other embodiments, the BS may communicate using other communication protocols, such as the IEEE 802.11 family of wireless communication protocols. Further, in some embodiments, the BS may communicate over licensed spectrums, whereas in other embodiments the BS may communicate over unlicensed spectrums. The present disclosure is not intended to be limited to the implementation of any particular wireless communication system architecture or protocol. In another embodiment, the BS may communicate with the UE using the 3GPP 5G protocols.

Due to the large cell range of NTN IoT networks, the distance between the UE and the BS (for example, d₀+d₁ as shown in Fig. 1) might be different with different UE positions. In order to synchronize the uplink data at BS side, timing advance (TA) is necessary for NTN UEs.

The timing advance time (*T_{TA}*) to be applied by an NTN UE in different radio resource control (RRC) states can be determined by the following formula: ${T}_{TA} = \left({N}_{TA}+{N}_{TA , UE - specific}+{N}_{TA , common}+{N}_{TA , offset}\right) \times {T}_{c}$ where
- *N_{TA}* is a value from a TA command in a random access response (RAR) message or media access control (MAC) control element (CE) message received from the BS.
- *N_{TA,UE-specific}* is related to the RTT of the service link, i.e., UE-specific TA. The UE-specific TA is autonomously determined by the UE based on a GNSS-acquired UE position and a serving satellite position from broadcast ephemeris. For *N_{TA,UE-specific}* update, the UE needs to acquire satellite ephemeris and use its own propagator to predict its specific TA during a certain time period without the need of acquiring new ephemeris data.
- *N_{TA,common}* is a network-controlled common TA related to the RTT of the feeder link, and may include any timing offset considered necessary by the network. The common TA at time t (*N_{TA,common}*(*t*)) can be calculated by an initial common TA at time t₀ (*N*_{*TA,common,t*₀}) and a common TA drift rate (*TA*_{*commondrift,t*₀}, also broadcast by a SIB (system information block)) as: ${N}_{TA , common} \left(t\right) = {N}_{TA , common , {t}_{0}} + \left⌊{TA}_{commondrift , {t}_{0}}⋅\left(t-{t}_{0}+{δ}_{{t}_{0}}\right)\right⌋$ where *δ*_{*t*₀} denotes a one-way propagation delay from the BS to the UE at time t₀ (UE's timing).
   For *N_{TA,common}* update, the assistance information (e.g., the initial common TA and the common TA drift rate) acquired in the SIB or higher layer signaling will be valid only during a validity time period, which depends on the maximum tolerable error on common TA estimation and the order of the common TA approximation to be carried out by the UE.
- *N_{TA,offset}* is an offset of *N_{TA},* which depends on band and LTE/NR coexistence.

In Fig. 1, the propagation delay between the satellite and the BS, that is common to all UEs in the range of the satellite, is d₀/*c* = T₀ (which can be referred to as common propagation delay), in which c is the speed of light. The propagation delay between the satellite and the UE, that is specific to each UE in the range of the satellite, is d₁/*c* = T₁ (which can be referred to as UE-specific propagation delay). The TA is twice the value of the propagation delay (or the propagation delay is half of the TA). The TA can be also referred to as timing offset (TO). The TA for bent-pipe payload is 2×T₀ + 2×T₁, in which 2×T₀ is common TA (which is common to all UEs), and 2×T₁ is UE-specific TA (which is specific to each UE). Therefore, the TA (or whole TA) for bent-pipe payload is equal to the sum of common TA and UE-specific TA. That is, TA (or whole TA) = common TA + UE-specific TA = 2×T₀ + 2×T₁.

In the example of Fig. 1, the TA (= common TA + UE-specific TA) reflects the round trip delay between the BS and the UE, in which the common TA reflects the round trip delay between the BS and the satellite (one way delay between the BS and the satellite can be referred to as 'feeder link delay'), and the UE-specific TA reflects the round trip delay between the satellite and the UE (one way delay between the satellite and the UE can be referred to as 'service link delay').

As a whole, the common TA is determined by the distance between the BS and the satellite, that is, the common TA is determined by the position of the BS and the position of the satellite. The UE-specific TA is determined by the distance between the satellite and the UE, that is, the UE-specific TA is determined by the position of the satellite and the position of the UE.

The position of the BS is basically predetermined and known to the BS, while the position of the satellite is always changing. However, the position of the satellite at any specific time point is known to (or can be calculated by) the BS, depending on satellite ephemeris information. Therefore, with the position of the satellite and the position of the BS, the common TA at any time point is known to (or can be calculated by) the BS.

The position of a UE can be known by the UE itself, if the UE assumingly has a GNSS capability (e.g. the UE has a GNSS module). The position of the UE can be acquired based on the GNSS module. If the UE also has satellite ephemeris information (or satellite moving information), the UE can calculate the UE-specific TA. Because the position of the UE can dynamically change, the BS generally does not know the exact position of each UE. On the other hand, because the coverage of the satellite can be determined (e.g. according to the elevation of the satellite and the elevation angle), the maximal UE-specific TA and the minimal UE-specific TA at any time point can be calculated by the BS on the basis of the coverage of the satellite.

Due to long round-trip delay and large cell range of NTN cell (footprint), the TA can be very large. For example, the round trip time for LEO at an elevation of 600km can be 28.408 ms (millisecond). The long round-trip delay has an impact on the uplink synchronization. Therefore, the validity timer for the uplink synchronization in NTN IoT should be considered.

There are multiple timers in the communication system, for example, the HARQ RTT timer, and the time alignment timer.

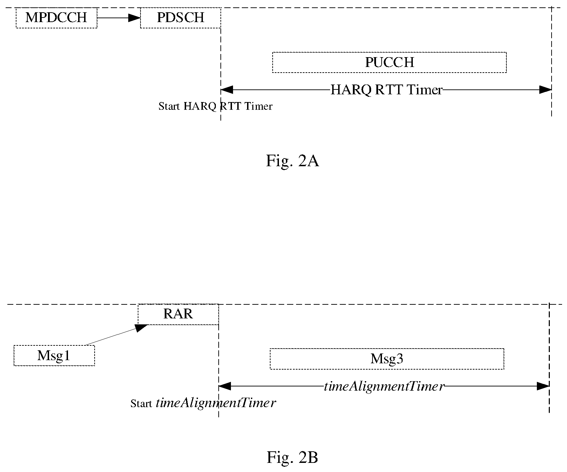

Fig. 2A illustrates a HARQ RTT timer.

As shown in Fig. 2A, upon receiving a physical downlink shared channel (PDSCH) scheduled by a machine-type communication (MTC) physical downlink control channel (PDCCH), a UE may start the HARQ RTT timer. During running of the HARQ RTT timer, the UE may transmit physical uplink control channel (PUCCH).

For the bandwidth reduced and low complexity (BL) UEs, and UEs in enhanced coverage, the length of the HARQ RTT timer is (*7 + N*) ms, where *N* is the used PUCCH repetition factor, and only valid (configured) UL subframes as configured by higher layers in the parameter, i.e. *fdd-UplinkSubframeBitmapBR,* are counted. In the case of time division duplexing (TDD) scenario, the length of the HARQ RTT timer is (*3* + *k + N*) ms, where *k* is the interval between the last repetition of PDSCH transmission and the first repetition of the transmission of associated HARQ feedback, and *N* is the used PUCCH repetition factor, where only valid UL subframes are counted.

In other scenarios, if the PDCCH indicates a DL transmission or if a DL assignment has been configured for a subframe, the NB-IoT UE, the BL UE or the UE in enhanced coverage starts the HARQ RTT timer for the corresponding HARQ process in the subframe containing the last repetition of the corresponding PDSCH reception; and other UEs start the HARQ RTT timer for the corresponding HARQ process.

In view of the above, the HARQ RTT timer is started or restarted immediately after receiving the corresponding downlink signaling, and the HARQ RTT timer is determined by the repetition number of uplink signal.

Regarding the time alignment timer, it may be represented by *timeAlignmentTimer,* and is used for closed loop TA update. The length of the *timeAlignmentTimer* may be selected from a group of values including, for example, 500 subframes, 750 subframes, 1280 subframes, 1920 subframes, 2560 subframes, 5120 subframes, 10240 subframes, or infinity.

Upon receiving a TA command in a MAC CE message, the UE may apply the TA command for the indicated TA group (TAG), and start or restart the *timeAlignmentTimer* associated with the indicated TAG.

Upon receiving a TA command in an RAR message for a serving cell belonging to a TAG, the UE may start or restart the *timeAlignmentTimer* associated with this TAG.

For example, Fig. 2B illustrates a time alignment timer.

In Fig. 2B, the UE transmits a message 1 (Msg1, including a random access preamble) to the BS. Upon receiving an RAR from the BS, the UE starts the time alignment timer, and transmits a message 3 (Msg3) during running of the time alignment timer.

In summary, the time alignment timer is started or restarted immediately after receiving a MAC CE or RAR, and the timer length is configured in a SIB, for example, SIB2.

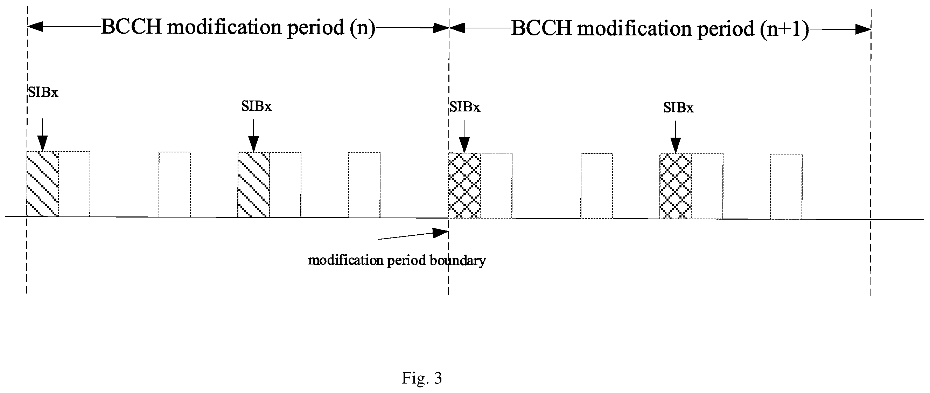

Fig. 3 illustrates an example of a BCCH modification period according to some embodiments of the present disclosure. The BCCH modification period may also be referred to as a BCCH modification window.

Fig. 3 shows two BCCH modification periods, which is the n^{th} BCCH modification period (i.e. BCCH modification period (n)) and the (n+1)^{th} BCCH modification period (i.e. BCCH modification period (n+1)).

The change of system information (other than for earthquake and tsunami warning system (ETWS), commercial mobile alert system (CMAS), extended access barring (EAB), and unified access control (UAC) parameters and other than for AB parameters for NB-IoT) only occurs at specific radio frames, i.e. the concept of a modification period is used.

Within a modification period, the system information may be transmitted a number of times with the same content, as defined by its scheduling. For example, in the n^{th} BCCH modification period, the SIBx is transmitted twice with the same content. The SIBx may be a type of SIB message, for example, SIB30, or SIB35, etc. In the (n+1)^{th} BCCH modification period, the SIBx may be updated, and the SIBx is also transmitted twice with the same updated content.

The modification period boundaries, for example, the modification period boundary between the n^{th} BCCH modification period and the (n+1)^{th} BCCH modification period, are defined by system frame number (SFN) values for which SFN mod *m* = 0, where *m* is the number of radio frames included in a modification period. The modification period is configured by system information.

For NB-IoT, a hyper system frame number (H-SFN) is always provided and the modification period boundaries are defined by SFN values for which (H-SFN × 1024 + SFN) mod m = 0, where m is determined by a modification period coefficient (e.g., *modificationPeriodCoeff*) and a default paging cycle (e.g., *defaultPagingCycle*). For example, m is calculated as follows: $m = modificationPeriodCoeff \times defaultPagingCycle ;$ where *modificationPeriodCoeff =* { 16, 32, 64, 128}, *defaultPagingCycle =* {rf128, rf256, rf512, rf1024}.

In view of the above, the length of the BCCH modification period is larger than 40.96s, and may be up to 20min.

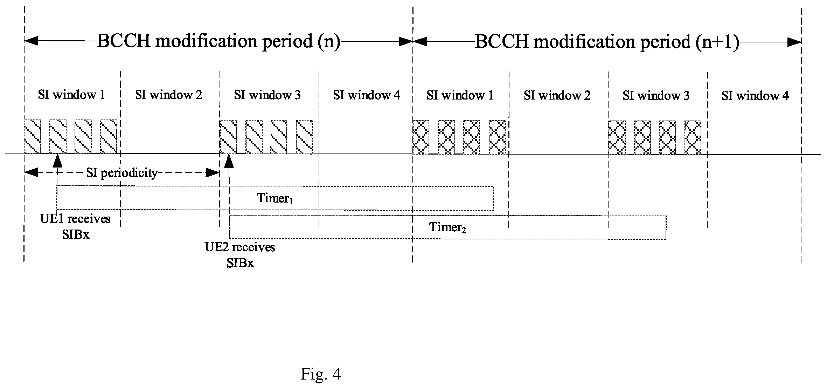

Fig. 4 illustrates an exemplary configuration of a synchronization validity timer.

Fig. 4 shows two BCCH modification periods, i.e., BCCH modification period (n) and BCCH modification period (n+1). Each BCCH modification period includes four system information (SI) windows, i.e., SI window 1, SI window 2, SI window 3, and SI window 4. Different types of SIBs can be transmitted in different SI windows. In each SI window, only one type of SIBs can be transmitted. All the repetitions of an SIB transmitted in a BCCH modification period have the same content. In the example of Fig. 4, SIBx (which includes at least one of the satellites ephemeris, the common TA, etc.) is transmitted in SI window 1 and SI window 3. Thus, the length of the SI periodicity of SIBx is twice the length of the SI window. SIBx with updated content is transmitted in SI window 1 and SI window 3 in BCCH modification period (n+1).

For IoT NTN, a UE may detect SIBx in SI window 1 or SI window 3 at any repetition in a BCCH modification period. Different UEs may receive SIBx at different times. For example, in Fig. 4, UE1 receives SIBx in SI window 1 in BCCH modification period (n), and UE2 receives SIBx in the SI window 3 in BCCH modification period (n).

If the synchronization validity timer follows mechanism of the HARQ RTT timer shown in Fig. 2A and the time alignment timer shown in Fig. 2B (e.g., timer configuration, start/restart time slot), the synchronization validity timer, e.g., Timer₁ and Timer₂, may be started immediately after the UE receives SIBx. In the example of Fig. 4, the length of the synchronization validity timer for each UE is the same. That is, the length of Timer₁ for UE1 and the length of Timer₁ for UE 2 are the same. For example, the length of the synchronization validity timer may be configured in SIBx or other signalling by the BS. According to Fig. 4, since the two UEs receive SIBx at different times, the two synchronization validity timers start at different times and expire at different times, too. The BS does not know when each UE would detect SIBx. As a result, the BS is not aware when the synchronization validity timer of a specific UE expires.

Furthermore, with the length of the BCCH modification period comparable with the length of the synchronization validity timer, it is hard for the BS to configure the synchronization validity timer. Therefore, there would be misunderstanding of expiration of the synchronization validity timer between the UE and the BS.

Since the NTN UL synchronization information (e.g., satellites ephemeris, common TA, etc) is included in SIBx, the UL synchronization information is cell-specific configured or beam-specific configured, and the reception subframe for different UEs may be different. It follows that the UL synchronization information validity durations for different UEs may be different. With the length of the NBIoT BCCH modification period being larger than 40.96s, up to 20min, misunderstanding of expiration of the synchronization validity timer between the UE and the BS may cause some severe issues.

The present disclosure proposes several improved solutions for configuring the synchronization validity timer, which may solve the misunderstanding of the expiration of the synchronization validity timer between the UE and the BS.

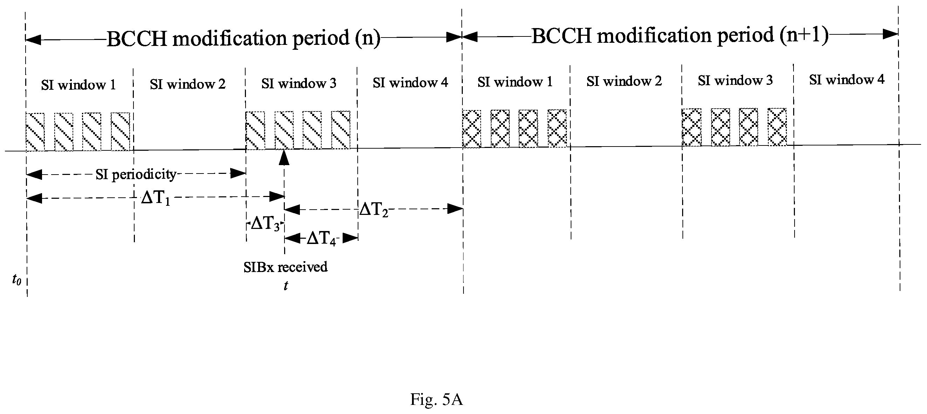

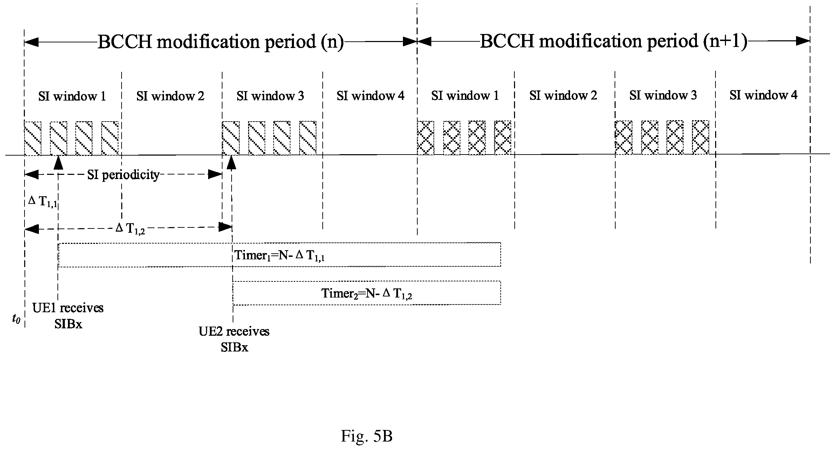

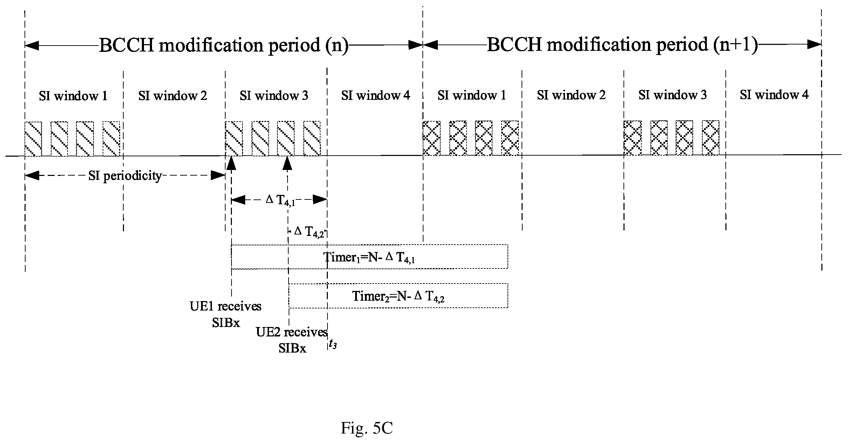

Figs. 5A, 5B, and 5C illustrate some exemplary configurations of a synchronization validity timer according to some embodiments of the present disclosure.

Figs. 5A, 5B, and 5C each show two BCCH modification periods, i.e. BCCH modification period (n) and BCCH modification period (n+1). Each BCCH modification period includes four SI windows, i.e., SI window 1, SI window 2, SI window 3, and SI window 4. The length of the SI periodicity of SIBx is twice the length of the SI window. The SIBx is transmitted in SI window 1 and SI window 3. The SIBx may include updated UL synchronization information, such as updated satellite ephemeris information and/or common TA information (including initial common TA and common TA drift rate). The SIBx transmitted in SI window 1 and SI window 3 of BCCH modification period (n) and that transmitted in BCCH modification period (n+1) may be different. It should be noted that although two BCCH modification periods and four SI windows are presented in Figs. 5A, 5B, and 5C, the solution also apply to any other number of BCCH modification periods or SI windows.

According to some embodiments of the present disclosure, an offset (ΔT) for the synchronization validity timer is introduced for determining the length of the synchronization validity timer. ΔT represents the time interval from receipt of the SIBx to a start or an end of the SI window or the BCCH modification window in which the SIBx is received. In the example of Fig. 5A, a UE receives the SIBx at the second repetition in SI window 3 in BCCH modification period (n). The UL synchronization information is deemed valid before the synchronization validity timer expires, such that the UE does not need to detect other SIBx before the synchronization validity timer expires. It should be noted that ΔT may be a positive number, a negative number, or zero. For example, Fig. 5A shows four offsets that can be applied:
- ΔT₁ represents the time interval from receipt of the SIBx to the start of the BCCH modification period (n), which is a positive number;
- ΔT₂ represents the time interval from receipt of the SIBx to the end of the BCCH modification period (n), which is a negative number;
- ΔT₃ represents the time interval from receipt of the SIBx to the start of the SI window 3 in the BCCH modification period (n), which is a positive number; and
- ΔT₄ represents the time interval from receipt of the SIBx to the end of the SI window 3 in the BCCH modification period (n), which is a negative number.

The length of the synchronization validity timer is determined by two parameters: the first parameter, N, is a configured value which can be indicated in a SIB, e.g., SIB1, SIB2, or SIBx; the second parameter is ΔT. More specifically, the length of the synchronization validity timer is N - ΔT.

In some embodiments, two separate synchronization validity timers can be configured for satellite ephemeris information and common TA information, respectively. Different N values can be configured for the two timers. For example, the value N associated with the timer for satellite ephemeris information can be configured from 3 min to 20 min for different UE orbit propagator models (e.g., the Kepler model, the Eckstein Hechler model, etc.). The value N associated with the timer for common TA information can be configured to tens of milliseconds to minutes depending on the satellite moving speed.

Supposing that the UE receives the SIBx at time *t*, the start of the BCCH modification period (n) is time *t₀,* and the offset ΔT₁, which is *t - t₀,* is applied, the length of the synchronization validity timer is N-ΔT₁ = N *- t + t₀.* The synchronization validity timer is started at time *t,* and ends or expires at *t* + (N-ΔT₁) = *t +* N *- t + t₀ =* N *+ t₀.* The synchronization validity duration for the UE is from t to N *+ t₀.* That is, the UE starts or restarts the synchronization validity timer upon receiving the SIBx, and the synchronization validity timer expires at time N + *t₀.*

As can be seen, the ending time of the synchronization validity timer is a fixed time point regardless of when the UE receives the SIBx in the BCCH modification period (n). Therefore, the misunderstanding of the expiration of the synchronization validity timer between the UE and the BS is eliminated.

Fig. 5B shows that UE1 receives the SIBx at the second repetition in SI window 1, and UE2 receives the SIBx at the first repetition in SI window 3. ΔT₁ (e.g., ΔT_{1,1} and ΔT_{1,2}) as defined above is applied. For UE1, the offset ΔT_{1,1} is the time interval from receipt of the SIBx to the start of the BCCH modification period (n). The length of timer1 for UE1 is N-ΔT_{1,1}, and timer1 expires at the time N *+ t₀.* For UE2, the offset ΔT_{1,2} is the time interval from receipt of the SIBx to the start of the BCCH modification period (n). The length of timer2 for UE2 is N-ΔT₂, and timer2 expires at the time N *+ t₀.* In this way, the synchronization validity timers for both UE1 and UE2 expire at the same time.

Fig. 5C shows that UE1 receives the SIBx at the first repetition in SI window 3, and UE2 detects the SIBx at the third repetition in SI window 3. ΔT₄ (e.g., ΔT_{4,1} and ΔT_{4,2}), which is negative, as defined above is applied. For UE1, the offset ΔT_{4,1} is the time interval from receipt of the SIBx to the end of SI window 3 (*t₃*)*.* The length of timer1 for UE1 is N-ΔT_{4,1}, and timer1 expires at the time N + *t₃.* For UE2, the offset ΔT_{4,2} is the time interval from receipt of the SIBx to the end of SI window 3. The length of timer2 for UE2 is N-ΔT_{4,2}, and timer2 expires at the time N *+ t₃.* In this way, the synchronization validity timers for both UE1 and UE2 expire at the same time.

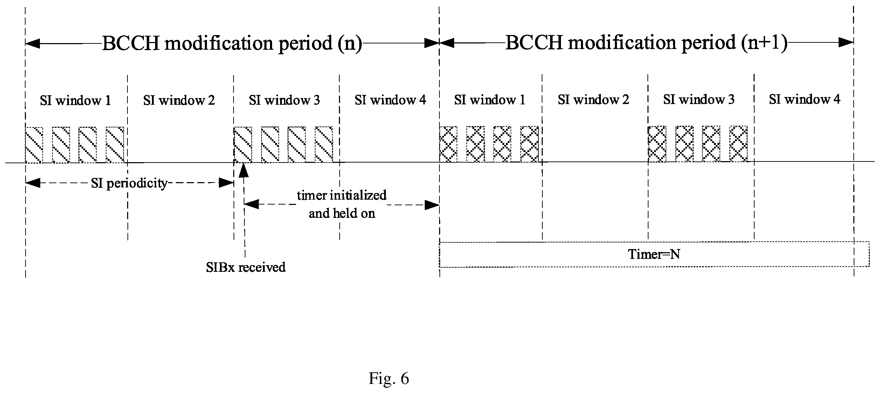

Fig. 6 illustrates an exemplary configuration of a synchronization validity timer according to some embodiments of the present disclosure.

Fig. 6 shows two BCCH modification periods, i.e., BCCH modification period (n) and BCCH modification period (n+1). Each BCCH modification period includes four SI windows, i.e., SI window 1, SI window 2, SI window 3, and SI window 4. The length of the SI periodicity is twice the length of the SI window. SIBx is transmitted in SI window 1 and SI window 3. The SIBx may include updated UL synchronization information, such as updated satellite ephemeris information and/or common TA information (including initial common TA and common TA drift rate). The SIBx transmitted in SI window 1 and SI window 3 of BCCH modification period (n) and that transmitted in BCCH modification period (n+1) may be different. It should be noted that although two BCCH modification periods and four SI windows are presented in Fig. 6, the solution also apply to any other number of BCCH modification periods or SI windows.

According to some embodiments of the present disclosure, upon receiving the SIBx, the UE initializes the synchronization validity timer, but does not start it. The synchronization validity timer is held on until the end of the SI window in which the SIBx is received, or until the end of the BCCH modification window in which the SIBx is received.

In the example of Fig. 6, the SIBx is received at the first repetition in SI window 3 of BCCH modification period (n), and then the synchronization validity timer is initialized immediately but is held on. At the end of BCCH modification period (n), the synchronization validity timer is started. The length of the synchronization validity timer is N, which is a fixed value that can be configured by the BS. For all the UEs which receive the SIBx in BCCH modification period (n), their synchronization validity timers all start at the end of BCCH modification period (n) and have the same length of N, and thus expire at the same time.

In some embodiments, the value N in the example shown in Figs. 5A-5B or the length of the synchronization validity timer in the example shown in Fig. 6 may be an integer multiple of a length of the BCCH modification window or an integer multiple of a length of a SI window. For example, the length may be twice the length of the BCCH modification window, or the SI window.

In some embodiments, the value N in the example shown in Figs. 5A-5B or the length of the synchronization validity timer in the example shown in Fig. 6 can be determined based on a TO drift rate. Any of the following options can be applied.

Option 1: a table for relationship of TO drift rate and the value N in the example shown in Figs. 5A-5B or the length of the synchronization validity timer in the example shown in Fig. 6 is preconfigured. An example of the table may be as follows, where N* may be the value N in the example shown in Figs. 5A-5B or the length of the synchronization validity timer in the example shown in Fig. 6:

| | TO drift rate | N* |
|---|---|---|
| 1 | > 20us/s | 100ms |
| 2 | 10us/s ~ 20us/s | 500ms |
| 3 | < 10us/s | 1000ms |

With option 1, no further signaling is used for indicating the length of the synchronization validity timer.

Option 2: the value N in the example shown in Figs. 5A-5B or the length of the synchronization validity timer in the example shown in Fig. 6 is calculated as follows: $N * = A / TO drift rate$ where A is configured by SIBx, and TO drift rate is determined by the NTN deployment (e.g., GEO, LEO, etc.).

With option 2, the signaling overhead is reduced.

Option 3: the value N in the example shown in Figs. 5A-5B or the length of the synchronization validity timer in the example shown in Fig. 6 is calculated as follows: $\begin{matrix}N * = \left⌊\left(A/TO drift rate/BCCH modification period length\right)\right⌋ \\ \times BCCH modification period length\end{matrix}$

That is, N* is equal to the largest integer less than or equal to (A/ TO drift rate/ BCCH modification period length), multiplied by the BCCH modification period length. In option 3, N* is an integer multiple of the length of the BCCH modification period.

When the timer for satellite ephemeris validity and/or common TA validity (i.e., the synchronization validity timer) of a UE expire, if the UE is in the RRC idle mode, it may take no further actions; if the UE is in the RRC connected mode, it switches to the RRC idle mode, and may receive new/updated SIB information. For NBIoT, the UE is not required to monitor SIB information in the RRC connected mode, so it should switch to the RRC idle mode when the synchronization validity timer expires.

When a timer for GNSS validity (i.e., GNSS validity timer) of a UE expires, if the UE is in the RRC idle mode, it may take no further actions; if the UE is in the RRC connected mode, it switches to the RRC idle mode, and may perform GNSS and initial random access procedure depending on traffic.

In some embodiments of the present disclosure, the UE may report assist information for timer configurations.

Regarding the timer for satellite ephemeris validity and/or common TA validity (i.e., the synchronization validity timer), which is determined by the satellite ephemeris (including satellite speed, satellite orbits, etc.), and the BS is aware of this information, thus the BS can configure the timer based on these information. Accordingly, the UE does not need to report the assist information for such timer.

Regarding the timer for GNSS validity, which is determined by UE mobility speed, UE GNSS accuracy, and GNSS start mode (including a cold start mode, a warm start mode, or a hot start mode), the UE may need to report GNSS timer assist information to the BS via MAC CE or PUSCH periodically or aperiodically.

The assist information may include at least one of the followings:
- A GNSS period. The BS may configure a GNSS measurement window for the UE every N periods.
- A GNSS measurement window length.
- A GNSS validity timer length. The GNSS validity timer length is suggested or preferred by the UE.

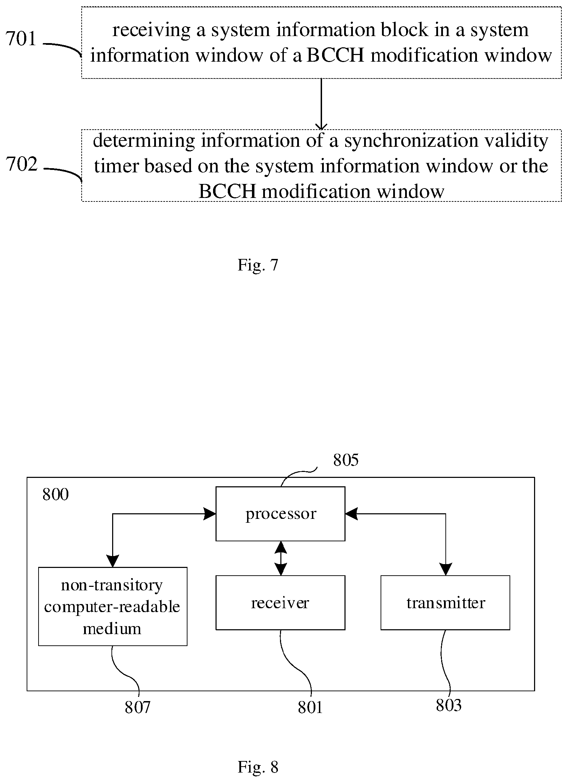

Fig. 7 illustrates a flow chart of an exemplary method, which can be performed by a UE or other device with similar functionality, according to some embodiments of the present disclosure.

In step 701, the UE receives a SIB in an SI window of a BCCH modification window.

In step 702, the UE determines information of a synchronization validity timer based on the SI window or the BCCH modification window.

In some embodiments, the SIB (e.g., SIBx) may include updated satellite ephemeris information and/or common TA information.

According to some embodiments, upon receiving the SIB, the UE may start or restart the synchronization validity timer, and the UE may determine a length of the synchronization validity timer based on a configured value, i.e. N, and an offset, i.e. ΔT, where the offset is a time interval from receipt of the SIB to a start or an end of the SI window or the BCCH modification window, e.g., the offsets ΔT₁, ΔT₂, ΔT₃, and ΔT₄ as shown in Fig. 5A.

In some embodiments, the configured value N is configured in the SIB or other SIBs. In some other embodiments, the configured value N is associated with a satellite ephemeris and/or a moving speed of a serving satellite. Specifically, the configured value N associated with the timer for satellite ephemeris can be configured from 3 min to 20 min for different UE orbit propagator models, and the configured value N associated with the timer for common TA can be configured to tens of millisecond to minutes depends on the satellite moving speed. In some other embodiments, the configured value is an integer multiple of a length of the BCCH modification window or an integer multiple of a length of an SI window. In still some other embodiments, the configured value is based on a TO drift rate.

According to some other embodiments, the UE may determine a start or restart time of the synchronization validity timer to be an end of the SI window or an end of the BCCH modification window. Specifically, the UE may initialize the synchronization validity timer upon receiving the SIB, hold on the synchronization validity timer until the start or restart time, and start or restart the synchronization validity timer at the start or restart time. For example, in Fig. 6, the UE initializes the synchronization validity timer upon receiving the SIBx, and holds on the timer until the end of BCCH modification window (n).

In some embodiments, the length of the synchronization validity timer is an integer multiple of a length of the BCCH modification window or an integer multiple of a length of a SI window, for example, the length of the timer may be twice the length of the SI window. In some embodiments, the length of the synchronization validity timer is based on a TO drift rate.

In some cases, the UE may transmit GNSS timer configuration assist information, to help the BS improve configurations for a GNSS validity timer. Correspondingly, at the BS side, the BS receives the GNSS timer configuration assist information. The GNSS timer configuration assist information may include at least one of a GNSS measurement period, a GNSS measurement window length, and a length of the GNSS validity timer.

Fig. 8 illustrates a simplified block diagram of an exemplary apparatus 800 according to some embodiments of the present application. The apparatus 800 may be or include at least a part of a UE or other device with similar functionality.

As shown in Fig. 8, the apparatus 800 may include a receiver 801, a transmitter 803, a processer 805, and a non-transitory computer-readable medium 807. The non-transitory computer-readable medium 807 has computer executable instructions stored therein. The processer 805 is configured to be coupled with the non-transitory computer readable medium 807, the receiver 801, and the transmitter 803. It can be contemplated that, in some other embodiments of the present application, the apparatus 800 may include more computer-readable mediums, receivers, transmitters and processors according to practical requirements. In some embodiments of the present application, the receiver 801 and the transmitter 803 can be a wireless receiver and a wireless transmitter, respectively, and can be integrated into a single device, such as a wireless transceiver. In certain embodiments, the apparatus 800 may further include an input device, a memory, and/or other components.

In some embodiments of the present application, the non-transitory computer-readable medium 807 may have stored thereon computer-executable instructions to cause the processor 805 to implement the method performed by the UE according to any embodiment of the present application, e.g., the method illustrated in Fig. 7.

For example, the processor 805 may be configured to receive, with the receiver 801, a SIB in an SI window of a BCCH modification window. The processor 805 may be further configured to determine information of a synchronization validity timer based on the SI window or the BCCH modification window.

The method of the present disclosure can be implemented on a programmed processor. However, controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device that has a finite state machine capable of implementing the flowcharts shown in the figures may be used to implement the processing functions of the present disclosure.

While the present disclosure has been described with specific embodiments thereof, it is evident that many alternatives, modifications, and variations will be apparent to those skilled in the art. For example, various components of the embodiments may be interchanged, added, or substituted in other embodiments. Also, all of the elements shown in each figure are not necessary for operation of the disclosed embodiments. For example, one skilled in the art of the disclosed embodiments would be capable of making and using the teachings of the present disclosure by simply employing the elements of the independent claims. Accordingly, the embodiments of the present disclosure as set forth herein are intended to be illustrative, the scope of the invention being defined by the invention.

In this disclosure, relational terms such as "first," "second," and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that comprises the element. Also, the term "another" is defined as at least a second or more. The terms "including," "having," and the like, as used herein, are defined as "comprising."

## Claims

1. A user equipment, UE, (800) for wireless communication, the UE (800) comprising:
at least one memory (807); and
at least one processor (805) coupled with at least one memory (807) and configured to cause the UE (800) to:
receive a system information block, SIB, in a system information window of a broadcast control channel, BCCH, modification window; and
upon receiving the SIB, determine a start or restart time of a synchronization validity timer to be an end of the system information window or an end of the BCCH modification window;
wherein the SIB comprises at least one of updated satellite ephemeris information or common timing advance, TA, information which is usable by the UE (800) to calculate a UE-specific TA for communication with a satellite.

2. The UE (800) of Claim 1, wherein the at least one processor (805) is configured to cause the UE (800) to:
start or restart the synchronization validity timer upon receiving the SIB, wherein a length of the synchronization validity timer is based on a configured value in the SIB and an offset, and wherein the offset is a time interval from receipt of the SIB to a start or an end of the system information window or the BCCH modification window.

3. The UE (800) of Claim 2, wherein the configured value is associated with a satellite ephemeris and/or a moving speed of a serving satellite, or the configured value is an integer multiple of a length of the BCCH modification window or an integer multiple of a length of a system information window, or the configured value is based on a time offset drift rate.

4. The UE (800) of Claim 1, wherein the at least one processor (805) is configured to cause the UE (800) to:
initialize the synchronization validity timer upon receiving the SIB;
hold on the synchronization validity timer until the start or restart time; and
start or restart the synchronization validity timer at the start or restart time.

5. The UE (800) of Claim 4, wherein a length of the synchronization validity timer is an integer multiple of a length of the BCCH modification window or an integer multiple of a length of a system information window.

6. The UE (800) of Claim 4, wherein a length of the synchronization validity timer is based on a time offset drift rate.

7. The UE (800) of Claim 1, wherein the at least one processor (805) is configured to cause the UE (800) to:
transmit Global Navigation Satellite System, GNSS, timer configuration assist information.

8. The UE (800) of Claim 7, wherein the GNSS timer configuration assist information comprises at least one of a GNSS measurement period, a GNSS measurement window length, or a length of a GNSS validity timer.

9. A method performed by a user equipment, UE, (800), the method comprising:
receiving a system information block, SIB, in a system information window of a broadcast control channel, BCCH, modification window; and
upon receiving the SIB, determining a start or restart time of a synchronization validity timer to be an end of the system information window or an end of the BCCH modification window;
wherein the SIB comprises at least one of updated satellite ephemeris information or common timing advance, TA, information which is usable by the UE (800) to calculate a UE-specific TA for communication with a satellite.

10. A base station for wireless communication, the base station comprising:
at least one processor configured to cause the base station to:
transmit, to a user equipment, UE, (800), a system information block, SIB, in a system information window of a broadcast control channel, BCCH, modification window, whereby the UE (800), upon receiving the SIB, can determine a start or restart time of a synchronization validity timer to be an end of the system information window or an end of the BCCH modification window;
wherein the SIB comprises at least one of updated satellite ephemeris information or common timing advance, TA, information which is usable by the UE (800) to calculate a UE-specific TA for communication with a satellite.

11. A method performed by a base station, the method comprising:
transmitting, to a user equipment, UE, (800), a system information block, SIB, in a system information window of a broadcast control channel, BCCH, modification window, whereby the UE (800), upon receiving the SIB, can determine a start or restart time of a synchronization validity timer to be an end of the system information window or an end of the BCCH modification window;
wherein the SIB comprises at least one of updated satellite ephemeris information or common timing advance, TA, information which is usable by the UE (800) to calculate a UE-specific TA for communication with a satellite.

## Patentansprüche

1. Endgerät, UE, (800) zur drahtlosen Kommunikation, wobei das UE (800) umfasst:
mindestens eine Speicher (807); und
mindestens einen Prozessor (805), der mit mindestens einem Speicher (807) gekoppelt ist und dazu konfiguriert ist, das UE (800) zu veranlassen zum:
Empfangen eines Systeminformationsblocks, SIB, in einem Systeminformationsfenster eines Änderungsfensters eines Rundsendesteuerkanals, BCCH; und
beim Empfang des SIBs, Bestimmen einer Start- oder Neustartzeit eines Synchronisationsgültigkeitszeitgebers als ein Ende des Systeminformationsfensters oder ein Ende des BCCH-Änderungsfensters;
wobei der SIB mindestens eines von aktualisierten Satellitenephemerideninformationen oder allgemeinen Zeitsteuerungsvorlauf-, TA, Informationen umfasst, die das UE (800) verwenden kann, um einen für ein UE spezifischen TA zur Kommunikation mit einem Satelliten zu berechnen.

2. UE (800) nach Anspruch 1, wobei der mindestens eine Prozessor (805) dazu konfiguriert ist, das UE (800) zu veranlassen zum:
Starten oder Neustarten des Synchronisationsgültigkeitszeitgebers beim Empfang des SIBs, wobei eine Länge des Synchronisationsgültigkeitszeitgebers auf einem in dem SIB konfigurierten Wert und einem Versatz basiert, und wobei der Versatz ein Zeitintervall von dem Empfang des SIBs bis zu einem Beginn oder einem Ende des Systeminformationsfensters oder des BCCH-Änderungsfensters ist.

3. UE (800) nach Anspruch 2, wobei der konfigurierte Wert Satellitenephemeriden und/oder einer Bewegungsgeschwindigkeit eines bedienenden Satelliten zugeordnet ist, oder der konfigurierte Wert ein ganzzahliges Vielfaches einer Länge des BCCH-Änderungsfensters oder ein ganzzahliges Vielfaches einer Länge eines Systeminformationsfensters ist, oder der konfigurierte Wert auf einer Zeit-Drift-Geschwindigkeit basiert.

4. UE (800) nach Anspruch 1, wobei der mindestens eine Prozessor (805) dazu konfiguriert ist, das UE (800) zu veranlassen zum:
Initialisieren des Synchronisationsgültigkeitszeitgebers beim Empfang des SIBs;
Halten des Synchronisationsgültigkeitszeitgebers bis zu der Start- oder Neustartzeit; und
Starten oder Neustarten des Synchronisationsgültigkeitszeitgebers zur Start- oder Neustartzeit.

5. UE (800) nach Anspruch 4, wobei eine Länge des Synchronisationsgültigkeitszeitgebers ein ganzzahliges Vielfaches einer Länge des BCCH-Änderungsfensters oder ein ganzzahliges Vielfaches einer Länge eines Systeminformationsfensters ist.

6. UE (800) nach Anspruch 4, wobei eine Länge des Synchronisationsgültigkeitszeitgebers auf einer Zeit-Drift-Geschwindigkeit basiert.

7. UE (800) nach Anspruch 1, wobei der mindestens eine Prozessor (805) dazu konfiguriert ist, das UE (800) zu veranlassen zum:
Senden von Hilfsinformationen zur Konfiguration eines Zeitgebers des globalen Satellitennavigationssystems, GNSS.

8. UE (800) nach Anspruch 7, wobei die Hilfsinformationen zur Konfiguration eines GNSS-Zeitgebers mindestens eines von einer GNSS-Messperiode, einer GNSS-Messfensterlänge oder einer Länge eines GNSS-Gültigkeitszeitgebers umfasst.

9. Verfahren, das von einem Endgerät, UE, (800), ausgeführt wird, wobei das Verfahren umfasst:
Empfangen eines Systeminformationsblocks, SIB, in einem Systeminformationsfenster eines Änderungsfensters eines Rundsendesteuerkanals, BCCH; und
beim Empfangen des SIBs, Bestimmen einer Start- oder Neustartzeit eines Synchronisationsgültigkeitszeitgebers als ein Ende des Systeminformationsfensters oder ein Ende des BCCH-Änderungsfensters;
wobei der SIB mindestens eines von aktualisierten Satellitenephemerideninformationen oder allgemeinen Zeitsteuerungsvorlauf-, TA, Informationen umfasst, die das UE (800) verwenden kann, um einen für das UE spezifischen TA zur Kommunikation mit einem Satelliten zu berechnen.

10. Basisstation zur drahtlosen Kommunikation, wobei die Basisstation umfasst:
mindestens einen Prozessor, der dazu konfiguriert ist, die Basisstation zu veranlassen zum:
Senden, an ein Endgerät, UE, (800), eines Systeminformationsblocks, SIB, in einem Systeminformationsfenster eines Änderungsfensters eines Rundsendesteuerkanals, BCCH, wodurch das UE (800) beim Empfang des SIBs eine Start- oder Neustartzeit eines Synchronisationsgültigkeitszeitgebers als ein Ende des Systeminformationsfensters oder ein Ende des BCCH-Änderungsfensters bestimmen kann;
wobei der SIB mindestens eines von aktualisierten Satellitenephemerideninformationen oder allgemeinen Zeitsteuerungsvorlauf-, TA, Informationen umfasst, die das UE (800) verwenden kann, um einen für ein UE spezifischen TA zur Kommunikation mit einem Satelliten zu berechnen.

11. Verfahren, das von einer Basisstation ausgeführt wird, umfassend:
Senden, an ein Endgerät, UE, (800), eines Systeminformationsblocks, SIB, in einem Systeminformationsfenster eines Änderungsfensters eines Rundsendesteuerkanals, BCCH, wodurch das UE (800) beim Empfang des SIBs eine Start- oder Neustartzeit eines Synchronisationsgültigkeitszeitgebers als ein Ende des Systeminformationsfensters oder ein Ende des BCCH-Änderungsfensters bestimmen kann;
wobei der SIB mindestens eines von aktualisierten Satellitenephemerideninformationen oder allgemeinen Zeitsteuerungsvorlauf-, TA, Informationen umfasst, die das UE (800) verwenden kann, um einen für ein UE spezifischen TA zur Kommunikation mit einem Satelliten zu berechnen.

## Revendications

1. Equipement utilisateur, UE, (800) pour communication sans fil, l'UE (800) comprenant :
au moins une mémoire (807) ; et
au moins un processeur (805) couplé à au moins une mémoire (807) et configuré pour amener l'UE (800) à :
recevoir un bloc d'informations système, SIB, dans une fenêtre d'informations système d'une fenêtre de modification d'un canal de commande de diffusion, BCCH ; et
à la réception du SIB, déterminer une heure de démarrage ou de redémarrage d'un temporisateur de validité de synchronisation comme étant une fin de la fenêtre d'informations système ou une fin de la fenêtre de modification de BCCH ;
dans lequel le SIB comprend au moins un élément parmi des informations d'éphémérides de satellite mises à jour ou des informations d'avance de temps, TA, communes qui sont utilisables par l'UE (800) pour calculer une TA spécifique à un UE pour la communication avec un satellite.

2. UE (800) selon la revendication 1, dans lequel ledit au moins un processeur (805) est configuré pour amener l'UE (800) à :
démarrer ou redémarrer un temporisateur de validité de synchronisation à la réception du SIB, dans lequel une longueur du temporisateur de validité de synchronisation est basée sur une valeur configurée dans le SIB et un décalage, et dans lequel le décalage est un intervalle de temps allant de la réception du SIB jusqu'à un début ou une fin de la fenêtre d'informations système ou de la fenêtre de modification de BCCH.

3. UE (800) selon la revendication 2, dans lequel la valeur configurée est associée à des éphémérides de satellite et/ou à une vitesse de mouvement d'un satellite de desserte, ou la valeur configurée est un multiple entier d'une longueur de la fenêtre de modification de BCCH ou un multiple entier d'une longueur d'une fenêtre d'informations système, ou la valeur configurée est basée sur une vitesse de dérive de décalage temporel.

4. UE (800) selon la revendication 1, dans lequel ledit au moins un processeur (805) est configuré pour amener l'UE (800) à :
initialiser le temporisateur de validité de synchronisation à la réception du SIB ;
maintenir le temporisateur de validité de synchronisation jusqu'à l'heure de démarrage ou de redémarrage ; et
démarrer ou redémarrer le temporisateur de validité de synchronisation à l'heure de démarrage ou de redémarrage.

5. UE (800) selon la revendication 4, dans lequel une longueur du temporisateur de validité de synchronisation est un multiple entier d'une longueur de la fenêtre de modification de BCCH ou un multiple entier d'une longueur d'une fenêtre d'informations système.

6. UE (800) selon la revendication 4, dans lequel une longueur du temporisateur de validité de synchronisation est basée sur une vitesse de dérive de décalage temporel.

7. UE (800) selon la revendication 1, dans lequel ledit au moins un processeur (805) est configuré pour amener l'UE (800) à :
envoyer des informations d'assistance de configuration de temporisateur du système global de navigation par satellite, GNSS.

8. UE (800) selon la revendication 7, dans lequel les informations d'assistance de configuration de temporisateur du GNSS comprennent au moins un élément parmi une période de mesure de GNSS, une longueur de fenêtre de mesure de GNSS, ou une longueur d'un temporisateur de validité de GNSS.

9. Procédé effectué par un équipement utilisateur, UE, (800), le procédé comprenant les étapes consistant à :
recevoir un bloc d'informations système, SIB, dans une fenêtre d'informations système d'une fenêtre de modification d'un canal de commande de diffusion, BCCH ; et
à la réception du SIB, déterminer une heure de démarrage ou de redémarrage d'un temporisateur de validité de synchronisation comme étant une fin de la fenêtre d'informations système ou une fin de la fenêtre de modification de BCCH ;
dans lequel le SIB comprend au moins un élément parmi des informations d'éphémérides de satellite mises à jour ou des informations d'avance de temps, TA, communes qui sont utilisables par l'UE (800) pour calculer une TA spécifique à un UE pour la communication avec un satellite.

10. Station de base pour communication sans fil, la station de base comprenant :
au moins un processeur configuré pour amener la station de base à :
envoyer, à un équipement utilisateur, UE, (800), un bloc d'informations système, SIB, dans une fenêtre d'informations système d'une fenêtre de modification d'un canal de commande de diffusion, BCCH, de sorte que l'UE (800), à la réception du SIB, peut déterminer une heure de démarrage ou de redémarrage d'un temporisateur de validité de synchronisation comme étant une fin de la fenêtre d'informations système ou une fin de la fenêtre de modification de BCCH ;
dans lequel le SIB comprend au moins un élément parmi des informations d'éphémérides de satellite mises à jour ou des informations d'avance de temporisation, TA, communes qui sont utilisables par l'UE (800) pour calculer une TA spécifique à un UE pour la communication avec un satellite.

11. Procédé, effectué par une station de base, le procédé comprenant les étapes consistant à :
envoyer, à un équipement utilisateur, UE, (800), un bloc d'informations système, SIB, dans une fenêtre d'informations système d'une fenêtre de modification d'un canal de commande de diffusion, BCCH, de sorte que l'UE (800), à la réception du SIB, peut déterminer une heure de démarrage ou de redémarrage d'un temporisateur de validité de synchronisation comme étant une fin de la fenêtre d'informations système ou une fin de la fenêtre de modification de BCCH ;
dans lequel le SIB comprend au moins un élément parmi des informations d'éphémérides de satellite mises à jour ou des informations d'avance de temporisation, TA, communes qui sont utilisables par l'UE (800) pour calculer une TA spécifique à un UE pour la communication avec un satellite.
